# EUROPEAN PATENT APPLICATION

(11) **EP 1 247 585 A1**
(43) Date of publication of application: **09.10.2002**
(21) Application number: 01830234.9
(22) Date of filing: 04.04.2001
(51) Int. Cl.: B04B 9/14, F16F 15/36

(54) **Balancing device for rotating bodies**

(71) Applicant: A.L.C. International Srl, 20135 Milano (IT)
(72) Inventor: Tornar, Carlo, 20125 Milano (IT)
(74) Representative: Petruzziello, Aldo

(57) **Abstract**

A balancing device comprises: a shaft (10) intended to be made integral with a rotating body; rings (40, 50) with an inside diameter greater than the outside diameter of the shaft, placed around said shaft and able to move, thus varying the distance of their centre of gravity from the axis of the shaft; means (60, 70) for elastically urging said rings into a locked state with respect to the shaft; means (80) for freeing said rings from the locked state in response to a rotation of the shaft at a speed greater than a pre-set angular speed.

When the shaft rotates at a greater speed than the threshold speed, the rings arrange themselves around the shaft so as to balance the eccentric rotating mass linked to the shaft.

The invention has been conceived with particular reference to centrifuges for medical use, but it can be applied to other rotating devices.

## Description

In apparatus comprising rotational parts, particularly parts rotatiing at a high number of revolutions per minute, an unbalance of rotating masses or bodies with respect to the axis of rotation causes problems such as noise and wear on the supports; in the event of higher unbalances and higher speeds, stopping of the apparatus is generally provided for (in order to avoid greater problems), thus leading to waste of time and loss of production.

It is aimed therefore at avoiding unbalances whenever possible. However, in some cases unbalances cannot be completely eliminated, for example in the case of washing machine drums in which the arrangement of the linen cannot, of necessity, be organized technically. Another example is a centrifuge for medical use, in which the tubes subjected to centrifugation contain organic specimens, for example, which cannot be regulated with absolute precision so as to present a pre-determined mass.

Balancing systems are therefore designed to balance masses subject to unbalance.

Known balancing systems comprise electromechanical devices that place a mass in a suitable position on the rotating part in response to some parameters detected by sensors. These devices involve the presence of a mechanical part and an electric or electronic part and are relatively complex and costly, therefore they are not considered suitable for some applications, for which it is currently preferred to deal with the unbalance.

An aim of the invention is to create an efficient automatic balancing system, which requires limited investment costs and is able to reliably operate for a long time.

Another aim of the invention is to create such a device that is suitable, in particular but not exclusively, for centrifuges for medical use.

Said objects have been achieved with a device as disclosed in claim 1.

Further new and useful characteristics are disclosed in the dependent claims.

In other words, the new device comprises a shaft, ring-shaped elements having a greater inside diameter than that of the shaft and rotatably mounted thereabout, locking means movable between a position in which they lock said rings in a fixed condition with respect to said shaft and a position in which they leave said rings free to move with respect to said shaft, and operating means to define one position or the other of the locking means. The locking means preferably comprise a plate or disc integral with the shaft and a plate or disc movable along the shaft, which grip the rings between them in the locked position thereof. The operating means preferably comprise spring means acting to press one said plate against the other and pivotal masses on one said plate, to contrast said spring means in a position of said pivotal masses determined by a rotational speed of the shaft higher than a threshold speed.

The new device requires low investment costs, does not require connection to an electrical system, and works automatically without requiring adjustments.

Further characteristics and advantages of the invention will be clear from the detailed description thereof, which is given below with reference to illustrative unrestrictive exemplary embodiments thereof shown in the attached drawings, in which:
Figure 1 is a broken-away, part-sectional diagrammatic view of a balancing device according to the invention,
Figure 2 is an axial sectional view taken through a balancing device, or half-device,
Figure 3 is a perspective view of a device without the case thereof;
Figure 4 is an exploded part-sectional perspective view of the oscillating bodies or operating means,
Figure 5 is a perspective view of devices according to the invention mounted on the arms of a centrifuge for medical use.

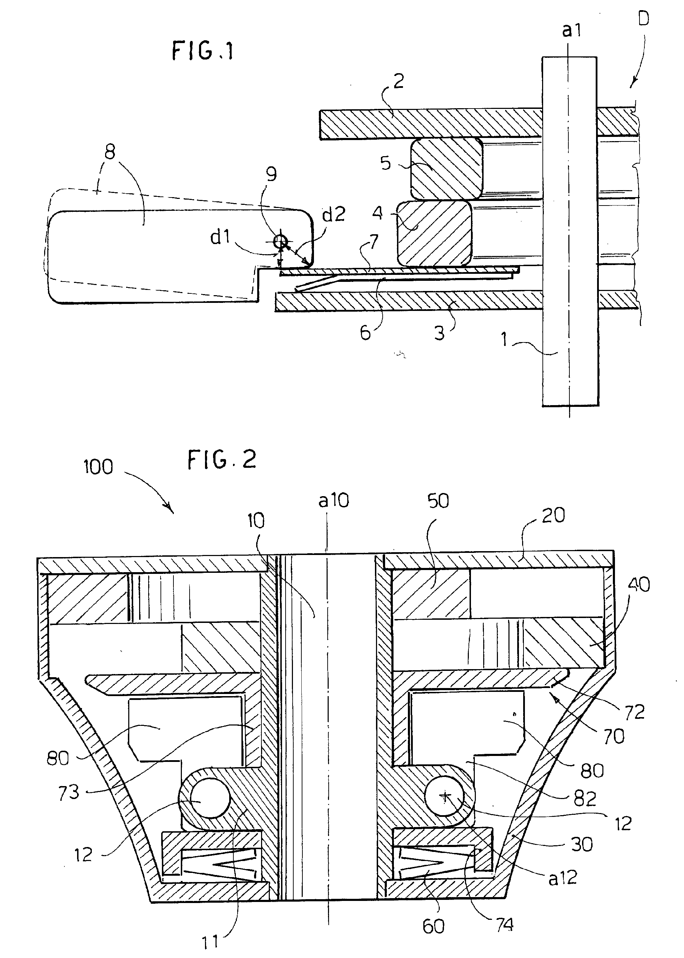

With reference firstly to Figure 1, and to an arrangement of the device as illustrated in said figure (which, however, should not be taken as restrictive), a balancing device according to the invention, shown diagrammatically, is designated as a whole with reference D and comprises a shaft 1 with which two axially spaced apart plates 2, 3, are integral. Two rings or annular masses or bodies 4, 5 have an inside diameter considerably greater than the outside diameter of the shaft 1 and are disposed about said shaft, between the plates 2 and 3. A spring 6, disposed between the plate 3 and a preloading disc 7, biases the disc 7 against said rings. A plurality of oscillating bodies 8 is hinged on the periphery of the disc 7, in a symmetrical arrangement around the axis al. The respective hinging points are designated by 9. Each body 8 has a cam surface around the hinge axis 9 and a first part of said surface is at a distance d1 from the axis 9. A second part of said surface is at a distance d2>dl from the axis 9. The centre of gravity of each body 8, in a resting position, is situated below the horizontal plane containing the axis 9, and the body 8 is in contact with the disc 7 with the surface d1 having a minimum radius. The spring 6 biases the disc 7 against the rings 4, 5 which therefore cannot move radially with respect to the axis a1 and maintain the initial position with respect to each other and with respect to the axis a1.

The shaft 1 of the device is made integral with the rotating mass to be balanced in rotation (not shown) so that the axis a1 of the shaft 1 coincides with the axis of rotation. Thus when the rotating mass to be balanced in rotation and the device D integral therewith are rotated from a certain rotational speed, the centre of gravity of each body 8 rises, due to centrifugal force, until it is situated at a maximum distance from al. This causes a rotation of the body 8 (anticlockwise in Figure 1) to the position indicated with a dashed line and brings the surface with a greater radius d2 into contact with the plate 7. This is thus forced to descend (with reference to the illustration in Figure 1) against the action of the spring 6, and releases the rings 4, 5. The rings, drawn into rotation, are free to make radial movements with respect to al and set automatically in the position in which the create they greatest possible balance.

During reduction of the number of revolutions, the spring is released and the plate 16 locks the rings in the last position reached.

It should be noted that the total number of balancing rings must always be even and that they must be arranged symmetrically above and below, that is on one side and the other of a plane containing the mass unbalance.

With reference to Figures 2-5, a further embodiment of the device of the invention will now be described, particularly but not exclusively designed to balance centrifuges for medical use.

The device as a whole is designated with reference numeral 100. It comprises a shaft 10, integral with a cover 20, and a case 30. In the space defined between the shaft, the case and the cover two annular masses or bodies or rings 40 and 50, respectively, are received having an inside diameter that is greater, or preferably much greater, than the outside diameter of the shaft about which they are arranged. The rings preferably have a rectangular shape with rounded edges in radial section and a smooth surface finish. The dimension a of the rings in the radial direction thereof is greater than the dimension b of the rings in the axial direction thereof.

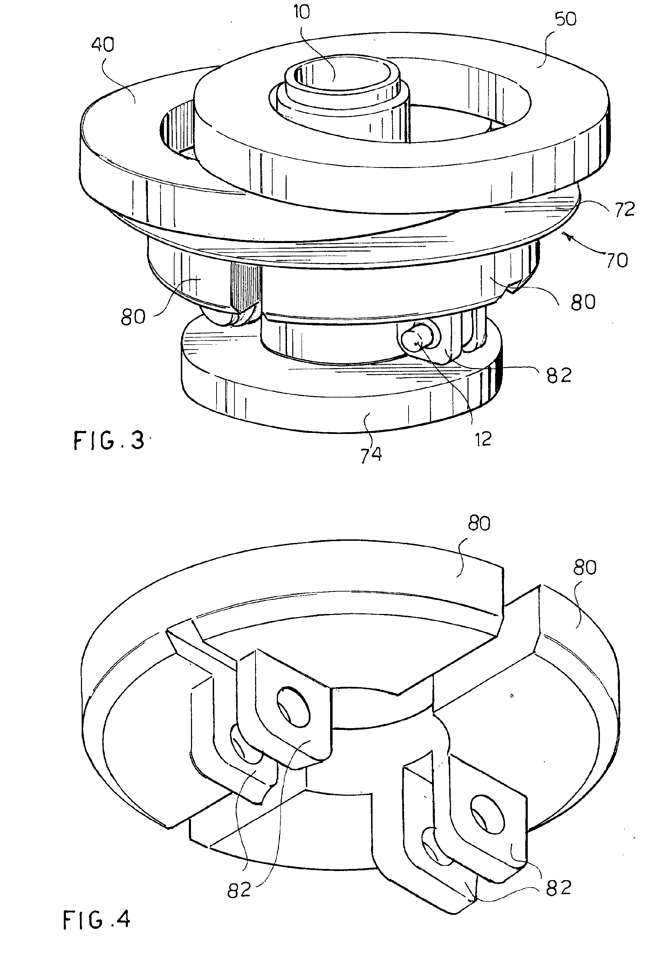

A preloading element 70 is received in the case between the rings and the bottom of the case and is movable between a locking position, in which it is spring-biased against said rings and keeps them locked with respect to one another and with respect to the shaft and a position in which it does not apply any force on said rings, leaving them free to slide one with respect to the other and both with respect to the shaft. The preloading element 70 comprises a disc part 72, uppermost in Figure 3, and a cylindrical guiding part 73 disposed about a shaft. A cup-shaped part or element 74 can be integral with the cylinder part 73 or can be a separate part, resting against said part 73. Between the element or part 74 and the bottom of the case 30 a pressure spring 60 is interposed, which therefore acts so as to bias the preloading element 70 against the rings 40, 50.

The shaft 10 has a pair of opposite tongues 11, 11, each of which carries a pivot 12, which defines a rotational axis a12. An oscillating mass or body 80, preferably but not necessarily semicircular in shape in a plan view, is mounted on each pivot by means of two tabs or lugs 82. Tabs 82 have a cam surface which is in contact with the surface of the element 74 uppermost in Figure 2. The cam surface has surface areas at a different distance from the axis a12. The centre of gravity of each mass 80 is situated in a plane at right angles to the axis a10 of the shaft, which is spaced apart from the plane at right angles to the axis a10 which contains the axes of the pivots a12.

The shaft 10 or the case 30 integral therewith can be made integral with a body, whose rotational unbalance is to be compensated for, in any manner within the reach of a person skilled in the art.

In resting conditions, the spring 60 urges the disc 72 against the rings, and maintains the retracted position of the masses 80 shown in Figure 2. The spring 60 biases the cup 74 against the cylindrical part 73 of the element 70 and thus locks the rings 40, 50 to each other and with respect to the case and the cover.

When the device 100 has been made integral with a rotational body, and thus turns around axis a10, the centres of gravity of masses 80, tend to move outward due to centrifugal force, rotating around axes a12.

Said rotation brings the part of the cam surfaces of tabs 82 which is at a greater distance from the axis a12 into contact with the surface of the element 74, and this urges the element 74 against the action of spring 60.

The stroke is generally very small, of the order of 0.2 mm but nevertheless sufficient to release the rings. The rings slide one on the other and thus set, in an appropriate position with respect to the axis 10 to balance the unbalances of the system. A subsequent decrease in the number of revolutions returns the device to the condition of Figure 2 but with the rings in a balancing position.

Although the example has been described with reference to a device having two rings, there can, however, be any number of rings, provided the number of rings applied to a body to be balanced is an even number.

It should be noted that the rings must be arranged in a uniform way on one side and the other of the plane of unbalance.

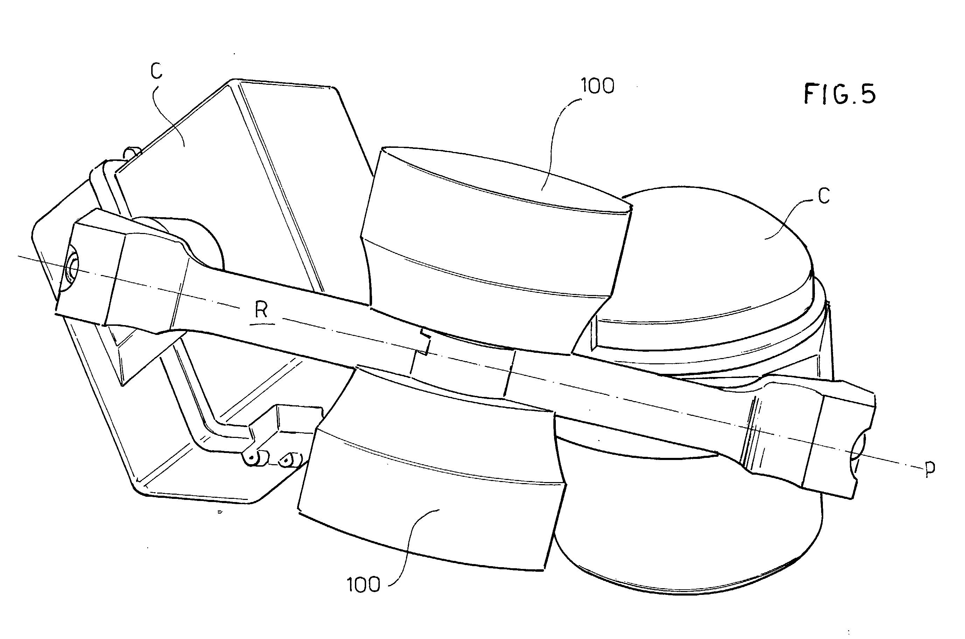

The device described will most often be used as a half-device, that is to say a device 100 will be applied on one side of the plane of unbalance and a device 100 will be applied on the other side of the plane of unbalance, as can be seen, for example, in Figure 5. In said figure, the two devices 100 are shown applied to the spokes R of a star-shaped rotor of a centrifuge for test tubes for analysis, and the plane p which contains the axis of the rotor pivots is the plane of unbalance. The test tube containers or buckets, referenced C, are carried on the ends of the spokes R.

## Claims

1. A balancing device for rotating bodies, **characterized in that** it comprises:
a shaft (1; 10) which defines an axis (a1; a10),
at least one ring (4, 5; 40, 50) around said shaft, said ring having an inside diameter greater than the outside diameter of the shaft,
biasing means (6, 7; 60, 70) to bias said at least one ring in a locked condition with respect to said shaft,
releasing means (8; 80) to release said at least one ring from the locked condition,
said at least one ring, when it is not in the locked condition, being able to translate with respect to the shaft, varying the distance between its axis and the shaft axis.

2. A balancing device according to claim 1, further comprising means to make said shaft and the rotating mass or body that is to be balanced integral in rotation.

3. A balancing device according to claim 1 **characterized in that** it comprises at least two said rings (4, 5; 40, 50).

4. A balancing device according to claim 1, **characterized in that** said biasing means for biasing the ring or rings in the locked condition with respect to the shaft comprise spring means (6, 60).

5. A balancing device according to claim 4, wherein the device comprises a case (30) integral with the shaft (10), and a preloading element (70) movable inside said case, and said spring means (60) act between the case and the preloading disc.

6. A balancing device according to claim 5 **characterized in that** said releasing means comprise at least one pair of oscillating bodies or masses (8; 80) pivoted along axes (9; a12) transverse to the shaft axis, each body having a cam surface, and the centre of gravity thereof in a plane parallel to and spaced apart from a plane of the pivotal axis of the body, said bodies being spring-biased into a retracted position wherein they do not affect the position of the preloading disc, said bodies rotating through an arc about the respective pivots to an extended position wherein they contrast the spring action on the preloading disc and on the rings.

7. A balancing device according to claim 6, **characterized in that** said extended position of the masses is reached due to centrifugal force on rotation of the device for angular speeds above a threshold speed.

8. A balancing device according to any preceding claim, for centrifuges for use in the medical field.
